# EUROPÄISCHE PATENTANMELDUNG

(11) **EP 0 723 356 A1**
(43) Veröffentlichungstag der Anmeldung: **24.07.1996**
(21) Anmeldenummer: 95890173.8
(22) Anmeldetag: 28.09.1995
(51) Int. Cl.: H04M 1/11

(54) **Telefonträger**

(30) Priorität: 18.01.1995 AT 64/95
(71) Anmelder: Ernst Stadelmann Gesellschaft m.b.H., A-4070 Eferding (AT)
(72) Erfinder: Reisinger, Franz, Ing., A-4311 Schwertberg (AT); Schleicher, Siegfried, A-4611 Buchkirchen (AT)
(74) Vertreter: Hübscher, Heiner, Dipl.-Ing.

(57) **Zusammenfassung**

Ein Telefonträger (1) weist eine auf einem Tragarm (2) befestigte Tragplatte (4) auf.

Um eine Tragplatte mit stufenlos anpaßbarer Plattengröße zu erreichen, besteht die Tragplatte (4) aus einem am Tragarm (2) abgestützten Mittelteil (6) und zwei am Mittelteil (6) querverschiebbar geführten Seitenteilen (7), wobei die Seitenteile (7) miteinander über einen Stelltrieb (9) im Sinne einer gegengleichen Bewegung antriebsverbunden und zwischen einer zusammengeschobenen Ausgangslage und einer auseinandergezogenen Endlage schiebeverstellbar sind.

## Beschreibung

Die Erfindung bezieht sich auf einen Telefonträger mit einer auf einem Tragarm befestigten Tragplatte.

Bei bekannten Telefonträgern ist die Tragplatte zur Aufnahme des Telefonapparates, aber auch anderer kleinerer Bürogeräte meist verdrehbar auf einem Tragarm gelagert, der seinerseits ebenfalls schwenkbar an einer Klemmeinrichtung zum Festklemmen an einer Tischplatte od. dgl. oder an einer Konsole zur Wandbefestigung abgestützt wird. Die Tragplatte ist einteilig und besitzt ein vorgegebenes Format, das die Tragplatte auf eine bestimmte Größe des aufzunehmenden Apparates abstimmt. Da heute Telefonapparate und andere Geräte sehr unterschiedlicher Gestalt und Dimension auf dem Markt sind, bieten die bekannten Tragplatten nur ausnahmsweise die für den jeweils gewählten Apparat richtige Größe und es kommt häufig zu einer ungenauen Positionierung und damit unsicheren Halterung der abgestellten Geräte. Es wurde zwar schon vorgeschlagen, der Tragplatte zur Größenanpassung einzelne Ergänzungsplatten zuzuordnen, die bedarfsweise an der Tragplatte angeklemmt oder angeflanscht werden, doch ergibt sich dadurch nur eine von den Ergänzungsplatten abhängige, stufenweise Änderung der Aufnahmegröße, so daß diese Anpassungsmöglichkeit nicht befriedigen kann. Darüber hinaus verlangen die Ergänzungsplatten eine aufwendige Lagerhaltung, den Vertrieb auch als eigenes Zubehör für ein Nachrüsten und nicht zuletzt eine umständliche Montage.

Der Erfindung liegt daher die Aufgabe zugrunde, diese Mängel zu beseitigen und einen Telefonträger der eingangs geschilderten Art zu schaffen, der sich auf bequeme Weise innerhalb weiter Bereiche an unterschiedlichste Größen der aufzunehmenden Apparate und Geräte anpassen läßt.

Die Erfindung löst diese Aufgabe dadurch, daß die Tragplatte aus einem am Tragarm abgestützten Mittelteil und zwei am Mittelteil querverschiebbar geführten Seitenteilen besteht, wobei die Seitenteile miteinander über einen Stelltrieb im Sinne einer gegengleichen Bewegung antriebsverbunden und zwischen einer zusammengeschobenen Ausgangslage und einer auseinandergezogenen Endlage schiebeverstellbar sind. Diese dreiteilige Tragplatte erlaubt durch einfaches Verstellen der Seitenteile gegenüber dem Mittelteil eine stufenlose Breitenanpassung des Aufstellbereiches zwischen der durch die Endlage gegebenen Mindestbreite und der durch die Ausgangslage bestimmten Maximalbreite, so daß die Tragplatte ohne weiteres Zubehör od. dgl. zur Aufnahme aller gängigen Telefonapparate, Bürogeräte u. dgl. geeignet ist. Da vor allem die Breiteneinstellung für eine gute Halterung der Apparate wichtig ist und unterschiedliche Längen wegen der Möglichkeit eines einseitigen Überstandes kaum eine Rolle spielen, noch dazu wenn üblicherweise die Tragplatte mit einer nach hinten ansteigenden Schräge und lediglich einer vorderen Randbegrenzung ausgebildet ist, ergibt sich die gewünschte exakte Positionierung und sichere Halterung. Der die beiden Seitenteile gegengleich antriebsverbindende Stelltrieb gewährleistet beim Verstellen eine stets symmetrische Lage der Seitenteile zur Mittelebene, wodurch stets eine zentrische Auflage gegeben ist und keine Funktionsstörungen oder Beschädigungen auf Grund exzentrischer Belastungen befürchtet zu werden brauchen.

Vorteilhaft ist es, wenn die Seitenteile den Mittelteil übergreifen und der als Hohlkasten ausgebildete Mittelteil in seinem Inneren den Stelltrieb und die Seitenteilführungen aufnimmt. Dadurch ist die durch die Seitenteile bestimmte Stützfläche für die aufzunehmenden Geräte um etwa die Wandstärke der Seitenteile höher als die durch den Mittelteil gegebene Stützfläche, so daß beim Abstellen der Geräte keine Schwierigkeiten hinsichtlich der Bodenfreiheit auftreten. Darüber hinaus bietet der Mittelteil mit seinem Hohlraum ausreichend Platz für die einwandfreie Führung der Seitenteile und zur geschützten Anordnung des Stelltriebes.

Als Stelltrieb könnte beispielsweise ein über zwei Umlenkrollen umlaufender Seil- oder Kettentrieb eingesetzt werden, an dessen Trumen jeweils einer der Seitenteile angreift. Ist allerdings als Stelltrieb ein Zahnstangentrieb aus einem mit zwei einander gegenüberliegenden Zahnstangen kämmenden Ritzel vorgesehen, wobei das Ritzel im Mittelteil lagert und die in Verschieberichtung verlaufenden Zahnstangen jeweils an einem Seitenteil angreifen, kommt es zu einem einfachen und doch funktionssicheren Stelltrieb der durch die verzahnungsbedingte Formschlußverbindung zwischen den Antriebsteilen eine exakte Lagezuordnung in jeder Antriebsstellung mit sich bringt.

Weist der Mittelteil einen in an sich bekannter Weise als Hörerauflage ausgebildeten Handgriff auf und sind die Seitenteile im Vorder- und Seitenkantenbereich mit Randbegrenzungen ausgestattet, ergibt sich eine sehr praxisgerechte Tragplattenausführung, da über den Handgriff die Tragplatte ohne Gefahr einer Seitenteilverstellung bewegt und gleichzeitig als Hörerablage verwendet werden kann und außerdem mit den Randbegrenzungen die abgestellten Apparate durch ein Zusammenschieben der Seitenteile zwangsweise mittig positioniert und gewissermaßen klemmend gehalten werden. Die Randbegrenzung im Vorderkantenbereich verhindert ein Abziehen oder Wegrutschen des Gerätes nach vorne hin und durch die freie Hinterkante entsteht die Möglichkeit des bedarfsweisen Geräteüberstandes bei einer Geräteüberlänge, ohne dabei die Stand- und Haltesicherheit des Gerätes auf der Tragplatte zu beeinträchtigen.

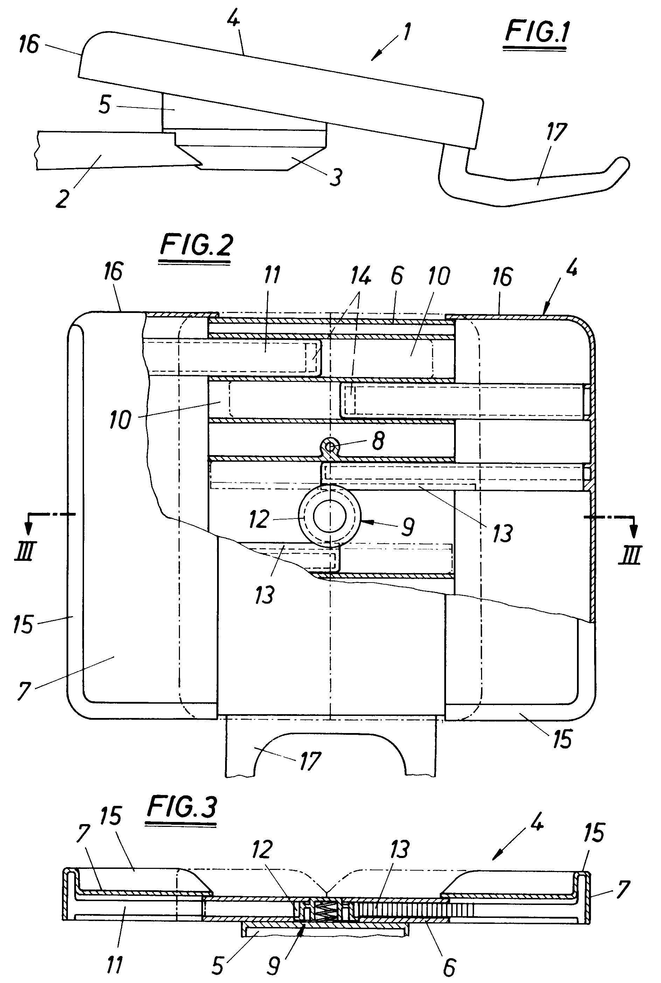

In der Zeichnung ist der Erfindungsgegenstand an Hand eines Ausführungsbeispieles rein schematisch veranschaulicht, und zwar zeigen
- Fig. 1: einen erfindungsgemäßen Telefonträger in Seitenansicht,
- Fig. 2: die Tragplatte des Telefonträgers in teilgeschnittener Draufsicht und
- Fig. 3: einen Querschnitt nach der Linie III-III der Fig. 2.

Ein Telefonträger 1 besteht aus einem nur angedeuteten Tragarm 2, auf dem über ein Drehlager 3 eine Tragplatte 4 befestigt ist, wobei durch ein keilscheibenförmiges Zwischenstück 5 die Tragplatte 4 eine Vorwärtsneigung bekommt.

Zur stufenlosen Größenanpassung an verschiedene Geräte ist die Tragplatte 4 aus einem hohlkastenförmigen Mittelteil 6 und zwei Seitenteilen 7 zusammengesetzt, wobei der Mittelteil 6 mittels einer Schraubverbindung 8 am Zwischenstück 5 des Drehlagers 3 festgeschraubt ist und die Seitenteile 7 am Mittelteil 6 querverschiebbar geführt und miteinander über einen Stelltrieb 9 im Sinne einer gegengleichen Bewegung antriebsverbunden sind. Dazu bildet der Mittelteil 6 in seinem Inneren Längsführungen 10, in die entgegengesetzt von beiden Seiten Führungsstücke 11 der Seitenteile 7 eingreifen. Als Stelltrieb 9 dient ein Zahnstangentrieb, der ein im Mittelteil 6 gelagertes Ritzel 12 und zwei damit kämmende, einander gegenüberliegende und jeweils an einem der Seitenteile 7 angreifende Zahnstangen 13 umfaßt. Wird daher einer der Seitenteile 7 bewegt, erfolgt über den Zahnstangentrieb zwangsweise auch eine gegensinnige Bewegung des anderen Seitenteils 7 und die Tragplatte 4 läßt sich stufenlos und symmetrisch zwischen einer zusammengeschobenen Ausgangslage (strichpunktierte Darstellung), in der die Seitenteile 7 aneinanderstoßen, und einer auseinandergezogenen Endlage (vollgezeichnete Stellung), die durch Anschläge 14 bestimmt wird, stufenlos schiebeverstellen.

Zur besseren Halterung eines auf der Tragplatte 4 abgestellten Gerätes sind die Seitenteile 7 im Vorder- und Seitenkantenbereich mit einer hochgezogenen Randbegrenzung 15 versehen, wobei die Hinterkante 16 freibleibt, um ein Überstehen gegebenenfalls überlanger Geräte zu ermöglichen. Zur Handhabung der Tragplatte 4 ist am Mittelteil 6 ein Handgriff 17 angesetzt, der gleichzeitig als Hörerauflage dient.

Es entsteht eine einfache, exakt an die verschiedensten Gerätegrößen anpaßbare Tragplatte 4, die sich mit jedem geeigneten Tragarm zu einem gewünschten Telefonträger od. dgl. kombinieren läßt.

## Patentansprüche

1. Telefonträger (1) mit einer auf einem Tragarm (2) befestigten Tragplatte (4), dadurch gekennzeichnet, daß die Tragplatte (4) aus einem am Tragarm (2) abgestützten Mittelteil (6) und zwei am Mittelteil (6) querverschiebbar geführten Seitenteilen (7) besteht, wobei die Seitenteile (7) miteinander über einen Stelltrieb (9) im Sinne einer gegengleichen Bewegung antriebsverbunden und zwischen einer zusammengeschobenen Ausgangslage und einer auseinandergezogenen Endlage schiebeverstellbar sind.

2. Telefonträger nach Anspruch 1, dadurch gekennzeichnet, daß die Seitenteile (7) den Mittelteil (6) übergreifen und der als Hohlkasten ausgebildete Mittelteil (6) in seinem Inneren den Stelltrieb (9) und die Seitenteilführungen (10, 11) aufnimmt.

3. Telefonträger nach Anspruch 1 oder 2, dadurch gekennzeichnet, daß als Stelltrieb ein Zahnstangentrieb (9) aus einem mit zwei einander gegenüberliegenden Zahnstangen (13) kämmenden Ritzel (12) vorgesehen ist, wobei das Ritzel (12) im Mittelteil (6) lagert und die in Verschieberichtung verlaufenden Zahnstangen (13) jeweils an einem Seitenteil (7) angreifen.

4. Telefonträger nach einem der Ansprüche 1 bis 3, dadurch gekennzeichnet, daß der Mittelteil (6) einen in an sich bekannter Weise als Hörerauflage ausgebildeten Handgriff (17) aufweist und die Seitenteile (7) im Vorder- und Seitenkantenbereich mit Randbegrenzungen (15) ausgestattet sind.
